# EUROPEAN PATENT APPLICATION

(11) **EP 1 552 916 A1**
(43) Date of publication of application: **13.07.2005**
(21) Application number: 03741299.6
(22) Date of filing: 09.07.2003
(51) Int. Cl.: B29C 65/16

(54) **METHOD OF JOINING PIPE-SHAPED ARTICLES**

(30) Priority: 09.07.2002 JP 2002200034; 09.07.2002 JP 2002200035; 09.07.2002 JP 2002200036
(71) Applicant: Ube Industries, Ltd., Ube-shi, Yamaguchi-ken 755-8633 (JP)
(72) Inventor: KATAYAMA, Tsutomu, C/O Ube Chemical Factory, Ube-shi, Yamaguchi 755-8633 (JP); IWATA, Yoshiro, C/O Ube Chemical Factory, Ube-shi, Yamaguchi 755-8633 (JP)
(74) Representative: HOEGER, STELLRECHT & PARTNER Patentanwälte
(86) International application number: PCT/JP2003/008716
(87) International publication number: WO 2004/005013

(57) **Abstract**

A method for joining pipe-shaped articles, comprising butting pipe-shaped articles comprising a resin member by abutting respective end parts thereof together directly or through a flange comprising a resin member or by inserting the end parts into a fitting comprising a resin member, or in this abutment or insertion, while disposing a laser light absorber between the end parts of the pipe-shaped articles or between the end part(s) of the pipe-shaped article(s) and the flange or fitting; at least one end part of the pipe-shaped article or the flange or fitting comprising a resin member having transparency to laser light; at least one end part of the pipe-shaped article or the flange, fitting or laser light absorber comprising a resin member having absorbency for laser light; and irradiating laser light on a portion contacted by the end part of the pipe-shaped articles, the flange, the fitting or the laser light absorber, thereby laser-welding them.

## Description

### TECHNICAL FIELD

The present invention relates to a method for joining pipe-shaped articles, where pipe-shaped articles, comprising resin members, are welded to each other directly or through a fitting or flange, comprising a resin member, by irradiated laser light.

### BACKGROUND ART

As for the method of joining pipes comprising a resin member, physical joining utilizing a pressing force by a bolt or the like and a sealing material, chemical joining of chemically joining the pipes by coating a reactive substance, and welding of joining the pipes by partially dissolving the resin are heretofore known. In a pipe, a long-term reliability of the joined portion is important and therefore, a welding method which ensures reliability is suitably used.

As for the welding method, heat welding utilizing heat and solvent welding using a resin-soluble solvent are known.

The heat welding method includes butt welding using a hot plate and a method of inserting pipes into an electric wire-embedded fitting and welding the pipes (see, for example, Kokai (Japanese Unexamined Patent Publication) No. 9-239839).

However, the butt welding is disadvantageous in that dripping readily occurs, a scrap comes off and is transported within the pipe to cause clogging or the like, a problem such as pressure loss arises and in the case of thin-walled pipes, appropriate fusion can be hardly performed due to difficulty in matching the axes.

Also, the electric wire-embedded fitting is disadvantageous in that its structure is complicated and the cost is high.

On the other hand, the solvent welding method includes a method of coating a solvent adhesive on the joining faces of pipes, inserting the pipes into a fitting and evaporating the solvent, thereby joining the pipes (see, for example, Kohyo (Japanese Unexamined Patent Publication) No. 4-506977).

However, this method is disadvantageous in that the solvent used is harmful, the drying of the adhesive takes too long and, depending on the kind of the resin member, a sufficiently high adhesive force cannot be obtained.

An object of the present invention is to solve these problems and provide a method for joining pipe-shaped articles, where pipe-shaped articles comprising a resin member can be laser-welded and strongly joined together, directly or through a fitting or flange, comprising a resin member, by irradiated laser light.

### DISCLOSURE OF THE INVENTION

In order to achieve the above-described object, the present invention provides the followings.
[1] A method for joining pipe-shaped articles, comprising:
   butting pipe-shaped articles, each comprising a resin member, by abutting respective end parts thereof together directly or through a flange comprising a resin member or by inserting the end parts into a fitting comprising a resin member, or in this abutment or insertion, while disposing a laser light absorber between the end parts of the pipe-shaped articles or between the end part(s) of the pipe-shaped article(s) and the flange or fitting,
   at least one end part of the pipe-shaped article or the flange or fitting comprising a resin member with a transparency to laser light,
   at least one end part of the pipe-shaped article or the flange, fitting or laser light absorber comprising a resin member with an absorbency for laser light, and
   irradiating laser light on a portion contacted by the end part of the pipe-shaped article, the flange, the fitting and/or the laser light absorber, thereby laser-welding them.
[2] The method for joining pipe-shaped articles as described in [1] above, which is a method of joining pipe-shaped articles through a fitting, wherein the pipe-shaped articles are joined by either one of the following methods:
   (A) a pipe-shaped article comprising a resin member having absorbency for laser light is inserted into a fitting comprising a resin member having transparency to laser light, and laser light is irradiated from the fitting side, thereby laser-welding the pipe-shaped article and the fitting; or
   (B) a laser light absorber is disposed on the outer surface of a pipe-shaped article comprising a resin member having transparency to laser light, the pipe-shaped particle is inserted into a fitting comprising a resin member having transparency to laser light, and laser light is irradiated from the fitting side, thereby laser-welding the pipe-shaped article and the fitting.
[3] The method for joining pipe-shaped articles as described in [1] above, which is a method of joining pipe-shaped articles through a flange, wherein the pipe-shaped articles are joined by any one of the following methods:
   (C) the end parts of pipe-shaped articles, each comprising a resin member, having transparency to laser light are butted together through a flange comprising a resin member having absorbance for laser light while applying a pressure, and laser light is irradiated from the end part sides of the pipe-shaped articles, thereby laser-welding the end parts;
   (D) the end parts of pipe-shaped articles, each comprising a resin member, having absorbency for laser light are butted together through a flange comprising a resin member having transparency to laser light while applying a pressure, and laser light is irradiated from the flange side, thereby laser-welding the end parts;
   (E) the end parts of pipe-shaped articles, each comprising a resin member, having transparency to laser light are butted together through a flange comprising a resin member having transparency to laser light while applying a pressure in the state that a laser light absorber is disposed at the abutting parts between the flange and the pipe-shaped articles, and laser light is irradiated from the end part sides of the pipe-shaped articles, thereby laser-welding the end parts; or
   (F) the end parts of pipe-shaped articles comprising a resin member having transparency to laser light are butted together through a flange comprising a resin member having transparency to laser light while applying a pressure in the state that a laser light absorber is disposed at the abutting parts between the flange and the pipe-shaped articles, and laser light is irradiated from the flange side, thereby laser-welding the end parts.
[4] The method for joining pipe-shaped articles as described in [1] above, which is a method of joining end parts of pipe-shaped articles with each other, wherein the pipe-shaped articles are joined by any one of the following methods:
   (G) the end part of a first pipe-shaped article comprising a resin member having transparency to laser light, with the inner surface of the end part having a tapered joining face, and the end part of a second pipe-shaped article comprising a resin member having absorbency for laser light, with the outer surface of the end part having a tapered joining face matching the tapered joining face of the end part of the first pipe-shaped article, are abutted together, and laser light is irradiated from the first pipe-shaped article side, thereby laser-welding the joining faces to each other; or
   (H) the end part of a first pipe-shaped article comprising a resin member having transparency to laser light, with the inner surface of the end part having a tapered joining face, and the end part of a second pipe-shaped article comprising a resin member having transparency to laser light, with the outer surface of the end part having a tapered joining face matching the tapered joining face of the end part of the first pipe-shaped article, in which a laser light absorber is disposed on the tapered joining face, are abutted together, and laser light is irradiated from the first pipe-shaped article side, thereby laser-welding the joining faces to each other.
[5] The method for joining pipe-shaped articles as described in [2] above, wherein in joining pipe-shaped articles by the method of (A), the pipe-shaped articles comprise an outer layer comprising a resin member having absorbency for laser light and an inner layer comprising a resin member having transparency to laser light.
[6] The method for joining pipe-shaped articles as described in [5] above, wherein the thickness of the outer layer is from 10 to 1,000 µm.
[7] The method for joining pipe-shaped articles as described in any one of [1] to [7] above, wherein the laser light absorber is a colorant having absorbency for laser light.
[8] The method for joining pipe-shaped articles as described in [7] above, wherein the laser light absorber is a film comprising a resin member containing a colorant having absorbency for laser light.
[9] The method for joining pipe-shaped articles as described in [8] above, wherein the thickness of the film is from 10 to 1,000 µm.
[10] The method for joining pipe-shaped articles as described in any one of [2] to [9] above, wherein the first pipe-shaped article, fitting or flange comprises a resin member having weak absorbency for laser light.
[11] The method for joining pipe-shaped articles as described in [10] above, wherein the resin member comprises a resin and an additive having weak absorbency for laser light.
[12] The method for joining pipe-shaped articles as described in [11] above, wherein the additive having weak absorbancy has a transmittance of 40 to 90% for laser light.
[13] The method for joining pipe-shaped articles as described in [12] above, wherein the additive having weak absorbency is at least one member selected from ethylene and/or propylene-based copolymers, styrene-based copolymers, modified ethylene and/or propylene-based copolymers and modified styrene-based copolymers.
[14] The method for joining pipe-shaped articles as described in [10] above, wherein in the resin member, an additive having absorbency for laser light is incorporated in the resin within a range of not allowing melting of the resin even when laser light is absorbed.
[15] The method for joining pipe-shaped articles as described in [1] to [14] above, wherein the resin member constituting the pipe-shaped article and fitting comprises a polyamide resin or a polyamide resin composition mainly comprising polyamide.
[16] The method for joining pipe-shaped articles as described in [1] to [15] above, wherein the pipe-shaped article is a fuel pipe for automobiles, an air brake pipe for automobiles, a chemical liquid-transporting pipe or a fuel gas-supplying or transporting pipe.

### BRIEF DESCRIPTION OF THE DRAWINGS

Figs. 1A to 5B each is a schematic view showing the joining mode of a fitting and pipes.
Figs. 6 to 8 each is a schematic view showing the flange joining mode in the present invention and the shape of the flange used.
Figs. 9 to 11 are schematic views showing the direct joining of pipes.

### MODE FOR CARRYING OUT THE INVENTION

The present invention is a method for joining pipe-shaped articles comprising butting pipe-shaped articles comprising a resin member by abutting respective end parts thereof together directly or through a flange comprising a resin member or by inserting the end parts of the pipe-shaped articles into a fitting comprising a resin member, or, in the abutment or insertion, while disposing a laser light absorber between ends parts of the pipe-shaped articles or between the end part(s) of the pipe-shaped article(s) and the flange or fitting; at least one end part of the pipe-shaped article or the flange or fitting comprising a resin member having transparency to laser light; at least one end part of the pipe-shaped article or the flange, fitting or laser light absorber comprising a resin member having absorbency for laser light; irradiating laser light on a portion contacted by the end part(s) of the pipe-shaped article(s), the flange, the fitting and/or the laser light absorber, thereby effecting laser-welding between the contacting portions.

More specifically, the method includes the following methods (A) to (I).

### Method of Joining Pipe-Shaped Articles through Fitting:

(A) A method where a pipe-shaped article comprising a resin member having absorbency for laser light is inserted into a fitting comprising a resin member having transparency to laser light, and laser light is irradiated from the fitting side, thereby laser-welding the pipe-shaped articles and the fitting

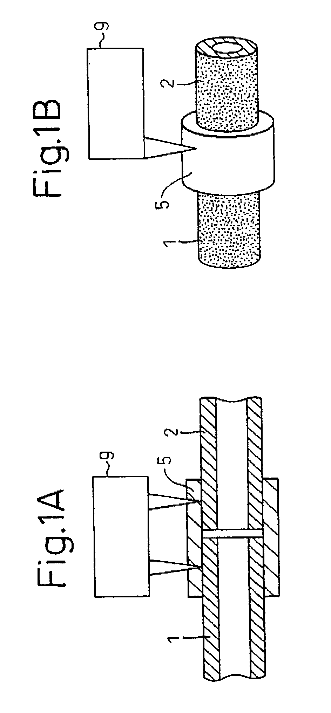

In this method, as shown in Figs. 1A and 1B, a pipe-shaped article 1 or 2 comprising a resin member having absorbency for laser light is inserted into a fitting 5 comprising a resin member having transparency to laser light, and laser light 9 is irradiated from the fitting side, thereby laser-welding the pipe-shaped articles and the fitting.

More specifically, when laser light is irradiated, the laser light 9 is transmitted through the fitting 5 comprising a resin member having transparency to laser light, the transmitted laser light reaches the surfaces of the pipe-shaped articles comprising a resin member 1 and 2 having absorbency for laser light, and the laser light is absorbed on the joining faces, whereby the abutted pipe-shaped articles 1 and 2 and the fitting 5 are melted and joined.

By joining pipe-shaped articles with a fitting according to this laser welding method, the problems of dripping and cost and the difficulty in fusion-welding thin-walled pipes can be overcome. In particular, when the resin is polyethylene (PE), a material having a high molecular weight and a high viscosity can be easily produced and dripping hardly occurs, but in the case of polyamide (PA), dripping is readily generated because the elevation of viscosity is industrially limited and also, the viscosity may decrease due to water absorption, therefore, the above-described laser welding method is suitable.

(B) A method where a laser light absorber is disposed on the outer surfaces of pipe-shaped articles comprising a resin member having transparency to laser light, the pipe-shaped articles are inserted into a fitting comprising a resin member having transparency to laser light, and laser light is irradiated from the fitting side, thereby laser-welding the pipe-shaped articles and the fitting

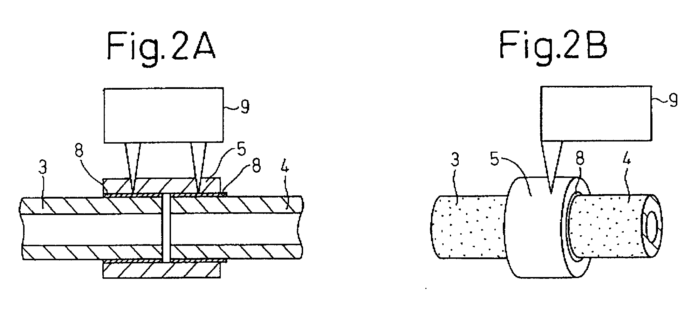

In this method, as shown in Fig. 2, a laser light absorber 8 is disposed on the joining portion with a fitting 5 on the outer surfaces of the pipe-shaped articles 3 and 4.

In this method, a laser light absorber 8 is disposed on the outer surfaces of the pipe-shaped articles 3 and 4 comprising a resin member having transparency to laser light, the pipe-shaped articles are inserted into a fitting 5 comprising a resin member having transparency to laser light, and laser light is irradiated from the fitting side, thereby laser-welding the pipe-shaped articles and the fitting.

More specifically, when laser light is irradiated, the laser light is transmitted through the fitting 5 comprising a resin member having transparency to laser light, and the laser light transmitted is absorbed by the laser light absorber 8 disposed on the outer surfaces of the pipe-shaped articles 3 and 4 comprising a resin member having transparency to laser light, whereby the pipe-shaped articles abutted at the joining faces and the fitting are melted and joined.

According to this laser welding method, a colorant having absorbency for laser light need not be blended in the pipe-shaped articles and coloration/discoloration due to the absorber does not occur, so that coloration to a desired color can be facilitated.

By joining pipe-shaped articles with a fitting according to this laser welding method, the problems of dripping and cost, the concern about the environment and safety due to a strong solvent, and the difficulty in fusion-welding thin-walled pipes, can be overcome. In particular, when the resin is PE, a material having a high molecular weight and a high viscosity can be easily produced and dripping hardly occurs, but in the case of PA, dripping is readily generated because the elevation of viscosity is industrially limited and also, the viscosity may decrease due to water absorption, therefore, the above-described laser welding method is suitable.

As for the fitting used in the methods (A) and (B), grooves or crepe-like fine asperities may be provided on the inner side coming into contact with the pipes. When grooves or fine asperities are provided, this is effective in improving the pipe-inserting property and relieving the stress at solidification.

Furthermore, the laser welding faces must be tightly contacted for obtaining high adhesive strength and in order to allow for application of a sufficiently large pressure, the outer diameter of the pipe is preferably made larger than the inner diameter of the fitting. For example, the ratio of the outer diameter of pipe to the inner diameter of fitting is preferably from 1.0 to 1.3.

If desired, the pipe may be tapered to extend from the inner side toward the outer side (opening part of pipe) to facilitate the insertion of the pipe.

As for the resin member material having transparency to laser light, when a resin member having weak absorbency for laser light (a resin member which is transparent to laser light but absorbs a part of laser light to cause heat generation from the resin in that portion) is used and irradiated with laser light, the resin member absorbs the energy and generates heat and the temperature at the joining face portion with the pipe-shaped articles is elevated to a certain degree. In this state, when the pipe-shaped articles, fitting or flange comprising a resin member having absorbency for laser light is heated by absorbing laser light and melted, the resin member having weak absorbency for laser light is also readily melted, as a result, the resin members are satisfactorily interlaced with each other in the junction part and a strong joining force is obtained.

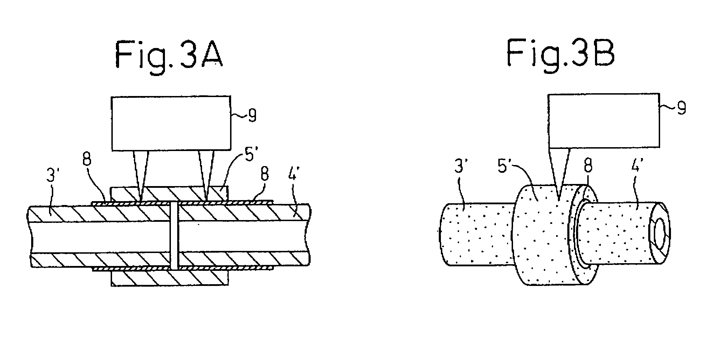

Fig. 3 shows an example of this embodiment, where 3' and 4' are a pipe-shaped article comprising a resin member having weak absorbency for laser light, and 5' is a fitting comprising a resin member having weak absorbency for laser light.

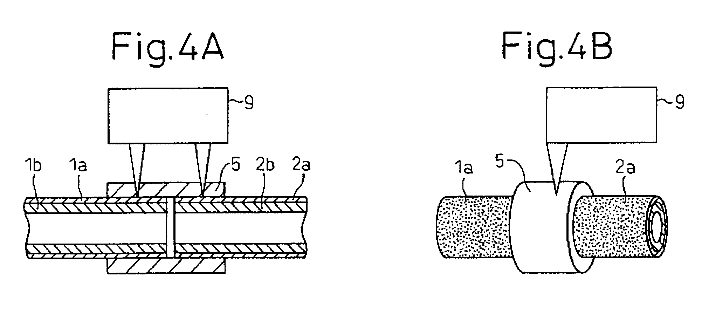

Also, in the method using such a fitting, as shown in Figs. 4A and 4B, the pipe-shaped articles 1 and 2 comprising a resin member having absorbency for laser light each may be constituted by an outer layer 1a or 2a comprising a resin member having absorbency for laser light and an inner layer 1b or 2b comprising a resin member having transparency to laser light. The thickness of the outer layer 1a or 2a is preferably from 10 to 1,000 µm.

Many of the laser-absorbing materials also absorb visible light and the resin member is colored by blending this material, but when the thickness of the outer layer comprising a resin member having absorbency for laser light is set to 10 to 1,000 µm, the effect of its color formation is small and the color of the pipe substrate (inner layer) governs the appearance. Accordingly, the apparent color can be controlled by the coloration of the pipe substrate and the latitude of coloration is broadened.

Furthermore, by limiting the laser-absorbing layer to the outer layer, heat generation does not occur in the inside and, as a result, cylindrical dissolution mark is less formed on the inner surface of the pipe and the junction part is reduced in the production of defects.

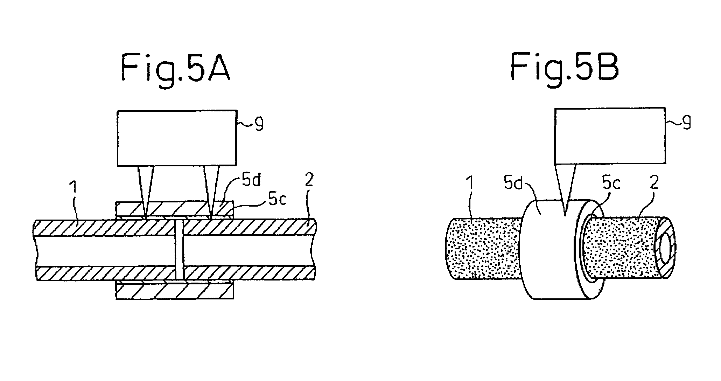

The same effect can also be obtained when in the embodiment shown by Figs. 1A and 1B, the fitting 5 comprising a resin member having transparency to laser light is constituted, as shown in Figs. 5A and 5B, by an inner layer 5c comprising a resin member having weak absorbency for laser light and an outer layer 5d comprising a resin member having transparency to laser layer.

### Method of Joining Pipe-Shaped Articles through a Flange:

(C) A method where the end parts of pipe-shaped articles comprising a resin member having transparency to laser light are butted together through a flange comprising a resin member having absorbency for laser light while applying a pressure, and laser light is irradiated from the end part sides of the pipe-shaped articles, thereby laser-welding the end parts of the pipe-shaped articles and the flange

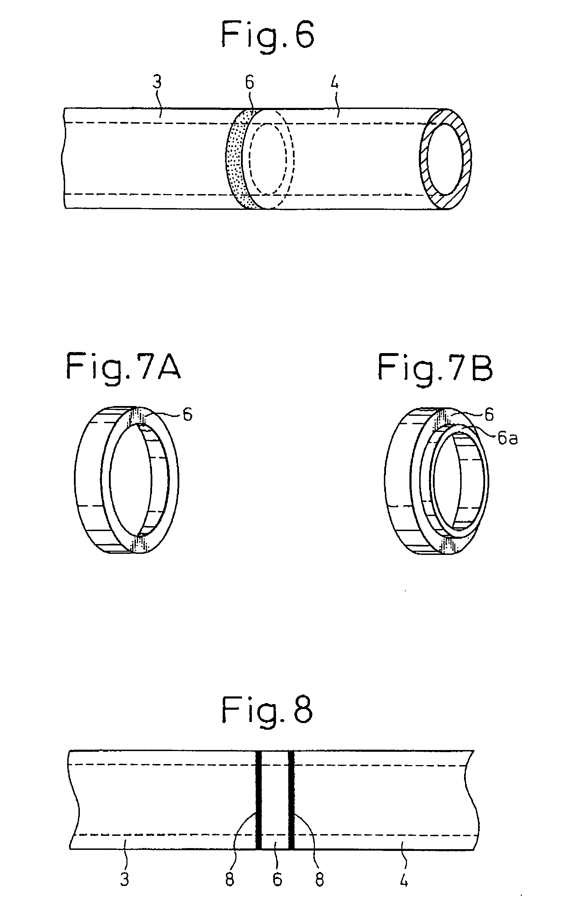

As shown in Fig. 6, the end parts of pipe-shaped articles 3 and 4 comprising a resin member having transparency to laser light are abutted against a flange 6 comprising a resin member having absorbency for laser light, and laser light is irradiated from the side of the pipe-shaped articles 3 and 4 comprising a resin member having transparency to laser light.

The shape of the flange 6 may be, as shown in Fig. 7A, nearly the same ring form as the end parts of the pipe-shaped articles. The outer diameter and inner diameter of the flange are preferably the same as those of the pipe-shaped articles but, for example, the outer diameter of the flange may be made larger than the outer diameter of the pipe-shaped articles. Furthermore, as shown in Fig. 7b, a protrusion 6a contacting with the inner surface (or outer surface) of the pipe-shaped article may be provided in the flange 6 at the abutting part against the end part of the pipe-shaped articles. By providing this protrusion, the junction area between the flange and the end part of the pipe-shaped article is increased, so that higher joining strength and pressure resistance can be obtained and dripping can also be prevented.

In this method, the end parts of pipe-shaped articles comprising a resin member having transparency to laser light are butted together through a flange comprising a resin member having absorbency for laser light while applying a pressure, and laser light is irradiated from the end part sides of the pipe-shaped articles, thereby laser-welding them.

More specifically, when laser light is irradiated, the laser light is transmitted through the pipe-shaped article comprising a resin member having transparency to laser light, the transmitted laser light reaches the surface of the flange comprising a resin member having absorbency for laser light, and the laser light is absorbed on the joining face, whereby the abutted flange and pipe-shaped article are melted and joined. Incidentally, the irradiation of laser light is performed for respective pipe-shaped articles abutted on both sides of the flange.

By joining pipe-shaped articles together through a flange according to this laser welding method, the problems of dripping and cost and the difficulty in fusion-welding thin-walled pipes can be overcome. In particular, when the resin is PE, a material having a high molecular weight and a high viscosity can be easily produced and the dripping hardly occurs, but in the case of PA, dripping is readily generated because the elevation of viscosity is industrially limited and also, the viscosity may decrease due to water absorption, therefore, the above-described laser welding method is suitable.

According to this laser welding method, a colorant having absorbency for laser light need not be blended in the pipe-shaped article and coloration/discoloration due to the absorber does not occur, so that coloration to a desired color can be facilitated.

(D) A method where the end parts of pipe-shaped articles comprising a resin member having absorbency for laser light are butted together through a flange comprising a resin member having transparency to laser light while applying a pressure, and laser light is irradiated from the flange side, thereby laser-welding the end parts of the pipe-shaped articles and the flange

In this method which is an embodiment similar to Fig. 6, the pipe-shaped articles comprise a resin member having absorbency for laser light, the flange comprises a resin member having transparency to laser light, and the laser light is irradiated from the flange side.

In this method, when laser light is irradiated, the laser light is transmitted through the flange comprising a resin member having transparency to laser light, the laser light transmitted reaches the surface of the pipe-shaped article comprising a resin member having absorbency for laser light, and the laser light is absorbed on the joining face, whereby the pipe-shaped article and the flange are melted and joined. Incidentally, the irradiation of laser light is performed for respective pipe-shaped articles abutted on both sides of the flange.

By joining pipe-shaped articles together through a flange according to this laser welding method, the problems of dripping and cost and the difficulty in fusion-welding thin-walled pipes can be overcome. In particular, when the resin is PE, a material having a high molecular weight and a high viscosity can be easily produced and dripping hardly occurs, but in the case of PA, dripping is readily generated because the elevation of viscosity is industrially limited and also, the viscosity may decrease due to water absorption, therefore, the above-described laser welding method is suitable.

(E) A method where the end parts of pipe-shaped articles comprising a resin member having transparency to laser light are butted together through a flange comprising a resin member having transparency to laser light while applying a pressure in the state that a laser light absorber is disposed at the abutting parts between the flange and the pipe-shaped articles, and laser light is irradiated from the end part sides of the pipe-shaped articles, thereby laser-welding the end parts of the pipe-shaped articles and flange

In this method, as shown by Fig. 8, the end parts of pipe-shaped articles 3 and 4 comprising a resin member having transparency to laser light are butted together through a flange 6 comprising a resin member having transparency to laser light, while applying pressure, in the state that a laser light absorber 8 is disposed at the abutting parts between the flange 6 and the pipe-shaped articles 3 and 4, and the laser light is irradiated from the end part sides of the pipe-shaped articles, thereby laser-welding the end parts.

(F) A method where the end parts of pipe-shaped articles comprising a resin member having transparency to laser light are butted together through a flange comprising a resin member having transparency to laser light while applying a pressure in the state that a laser light absorber is disposed at the abutting parts between the flange and the pipe-shaped articles, and laser light is irradiated from the flange side, thereby laser-welding the end parts

This method is similar to the embodiment of Fig. 8, but the end parts are laser-welded by irradiating the laser light not from the end part side 3 or 4 of the pipe-shaped article but from the flange 6 side.

In these methods (E) and (F), when laser light is irradiated, the laser light is transmitted through the pipe-shaped article or flange comprising a resin member having transparency to laser light, and the laser light transmitted is absorbed by the laser light absorber disposed at the abutting part between the flange and the pipe-shaped article, whereby the pipe-shaped article abutted and the flange are melted on the joining face and joined.

By joining pipe-shaped articles together through a flange according to this laser welding method, the problems of dripping and cost, and the difficulty in fusion-welding thin-walled pipes, can be overcome. In particular, when the resin is PE, a material having a high molecular weight and a high viscosity can be easily produced and dripping hardly occurs, but in the case of PA, dripping is readily generated because the elevation of viscosity is industrially limited and also, the viscosity may decrease due to water absorption, therefore, the above-described laser welding method is suitable.

According to this laser welding method, a colorant having absorbency for laser light need not be blended in the pipe-shaped article and coloration/discoloration due to the absorber does not occur, so that coloration to a desired color can be facilitated.

Also in this case where pipe-shaped articles are joined together through a flange, a resin member having weak absorbency for laser light can be used as the resin member having transparency to laser light.

### Method of Joining End Parts of Pipe-Shaped Articles with Each Other:

(G) A method where the end part of a first pipe-shaped article comprising a resin member having transparency to laser light, with the inner surface of the end part having a tapered joining face, and the end part of a second pipe-shaped article comprising a resin member having absorbency for laser light, with the outer surface of the end part having a tapered joining face matching the tapered joining face of the end part of the first pipe-shaped article, are abutted together, and laser light is irradiated from the first pipe-shaped article side, thereby laser-welding the joining faces to each other

The first pipe-shaped article comprises a resin member having transparency to laser light, where the inner surface of the end part has a tapered joining face.

The second pipe-shaped article comprises a resin member having absorbency for laser light, where the outer surface of the end part has a tapered joining face matching the tapered joining face of the end part of the first pipe-shaped article.

As for the resin of the second pipe-shaped article, by taking account of adhesion to the first pipe-shaped article, a resin of the same species as the resin used for the first pipe-shaped article is usually preferred.

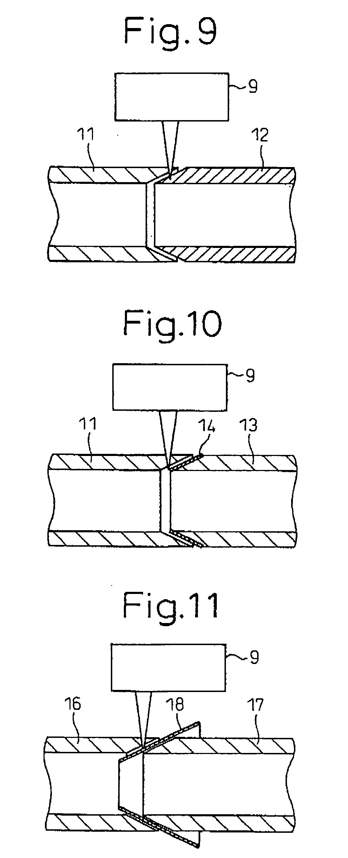

In this method, as shown in Fig. 9, the tapered joining face of the end part of the first pipe-shaped article 11 and the tapered joining face of the end part of the second pipe-shaped article 12 are abutted together and laser light 9 is irradiated from the first pipe-shaped article side, thereby laser-welding the joining faces to each other.

More specifically, when laser light is irradiated, the laser light is transmitted through the first pipe-shaped article comprising a resin member having transparency to laser light, the laser light transmitted reaches the surface of the second pipe-shaped article comprising a resin member having absorbency for laser light, and the laser light is absorbed on the joining face, whereby the second pipe-shaped article and the first pipe-shaped article abutted are melted and joined.

By joining pipe-shaped articles together according to this laser welding method, the problems of dripping and cost and the difficulty in fusion-welding thin-walled pipes can be overcome. In particular, when the resin is PE, a material having a high molecular weight and a high viscosity can be easily produced and dripping hardly occurs, but in the case of PA, dripping is readily generated because the elevation of viscosity is industrially limited and also, the viscosity may decrease due to water absorption, therefore, the above-described laser welding method is suitable.

In the first and second pipe-shaped articles, tapered joining faces matching and abutting each other are provided on respective abutting end parts and the tapered joining faces are joined together. Therefore, the junction area at the junction part is increased by the tapered portion and higher joining strength and pressure resistance can be obtained.

Furthermore, in the first and second pipe-shaped articles, the tapered joining faces provided on respective abutting end parts are laser-welded to each other and this provides an operational effect that the latitude of the laser light-emitting position is broadened.

(H) A method where the end part of a first pipe-shaped article comprising a resin member having transparency to laser light, with the inner surface of the end part having a tapered joining face, and the end part of a second pipe-shaped article comprising a resin member having transparency to laser light, with the outer surface of the end part having a tapered joining face matching the tapered joining face of the end part of the first pipe-shaped article, in which a laser light absorber is disposed on the tapered joining face, are abutted together, and laser light is irradiated from the first pipe-shaped article side, thereby laser-welding the joining faces to each other

In this method, the first pipe-shaped article comprises a resin member having transparency to laser light, where the inner surface of the end part has a tapered joining face.

The second pipe-shaped article comprises a resin member having transparency to laser light, where the outer surface of the end part has a tapered joining face matching the tapered joining face of the end part of the first pipe-shaped article. As for the resin of the second pipe-shaped article, by taking account of adhesion to the first pipe-shaped article, a resin of the same species as the resin used for the first pipe-shaped article is preferably used.

In this method, as shown in Fig. 10, a laser light absorber 14 is disposed on the tapered joining face on the outer surface of the end part of the second pipe-shaped article 13. The tapered joining face of the end part of the first pipe-shaped article 11 and the tapered joining face of the end part of the second pipe-shaped article 13, on which a laser light absorber 14 is disposed, are abutted together and laser light is irradiated from the first pipe-shaped article side, thereby laser-welding the joining faces to each other.

More specifically, when laser light is irradiated, the laser light is transmitted through the first pipe-shaped article comprising a resin member having transparency to laser light, and the laser light transmitted is absorbed by the laser light absorber disposed on the tapered joining face of the end part of the second pipe-shaped article, whereby the first and second pipe-shaped articles are melted and joined at joining faces.

According to this laser welding method, a colorant having absorbency for laser light need not be blended in the pipe-shaped article and coloration/discoloration due to the absorber does not occur, so that coloration to a desired color can be facilitated.

By joining pipe-shaped articles together according to this laser welding method, the problems of dripping and cost, the concern about the environment and safety due to a strong solvent, and the difficulty in fusion-welding thin-walled pipes can be overcome. In particular, when the resin is PE, a material having a high molecular weight and a high viscosity can be easily produced and dripping hardly occurs, but in the case of PA, dripping is readily generated because the elevation of viscosity is industrially limited and also, the viscosity may decrease due to water absorption, therefore, the above-described laser welding method is suitable.

In the first and second pipe-shaped articles, tapered joining faces matching and abutting each other are provided on respective abutting end parts and the tapered joining faces are joined together. Therefore, the junction area at the junction part is increased by the tapered portion and higher joining strength and pressure resistance can be obtained.

Furthermore, in the first and second pipe-shaped articles, the tapered joining faces provided on respective abutting end parts are laser-welded to each other and this provides an operational effect that the latitude of the laser light-emitting position is broadened.

Also, in this case where pipe-shaped articles are joined together directly, a resin member having weak absorbency for laser light can be used as the resin member having transparency to laser light.

(I) In the above, a laser light absorber is disposed on the joining face between resin members having transparency to laser light, but it is apparent that the laser light absorber can be disposed on the joining face between a resin member having transparency to laser light and a resin member having absorbency for laser light.

### Resin Member

In the present invention, the pipe-shaped articles, fitting and flange each comprises a resin member having absorbance or transparency to laser light.

### (Resin Having Absorbency for Laser Light)

The resin having absorbency for laser light is not particularly limited as long as it has thermoplasticity, can be shaped into a pipe-shaped article such as gas pipe or into a fitting or flange, and exhibits sufficiently high absorbency for laser light. Examples thereof include those obtained by mixing a colorant having absorbency for laser light in a resin such as polyvinyl alcohol, polyvinyl acetate, polyamide, polyolefin (e.g., polyethylene, polypropylene, a copolymer of ethylene, propylene or the like), polystyrene, polyvinyl chloride, polyvinylidene chloride, polymethyl methacrylate, a copolymer of styrene, vinyl chloride, methyl methacrylate, vinylidene chloride or the like, and condensed-system engineering plastic (e.g., polycarbonate, polyamide, polyester, polyether, polyether ketone, polyether ether ketone, polysulfone, polyimide). If desired, a reinforcing fiber such as glass fiber or carbon fiber may be added to the resin.

Particularly, in uses as a pipe for automobiles requiring chemical resistance and toughness or a fuel gas-supplying and/or transporting pipe, a polyamide resin or a polyamide resin composition mainly comprising a polyamide resin is suitably used.

The term "sufficiently high absorbency" as used herein means absorbency such that the portion received laser light absorbs the laser light and causes melting of that portion.

Examples of the polyamide resin include those comprising a diamine and a dibasic acid, comprising a lactam or an aminocarboxylic acid, or comprising a copolymer of two or more thereof.

Examples of the diamine include aliphatic diamines such as tetramethylenediamine, hexamethylenediamine, octamethylenediamine, nonamethylenediamine, undecamethylenediamine and dodecamethylenediamine, and diamines having an aromatic or cyclic structure, such as methaxylylenediamine.

Examples of the dicarboxylic acid include aliphatic diamines such as adipic acid, heptanedicarboxylic acid, octanedicarboxylic acid, nonanedicarboxylic acid, undecanedicarboxylic acid and dodecanedicarboxylic acid, and dicarboxylic acids having an aromatic or cyclic structure, such as terephthalic acid and isophthalic acid.

The lactam includes lactams having from 6 to 12 carbon atoms, and the aminocarboxylic acid includes an aminocarboxylic acid having from 6 to 12 carbon atoms. Examples thereof include 6-aminocaproic acid, 7-aminoheptanoic acid, 11-aminoundecanoic acid, 12-aminododecanoic acid, α-pyrrolidone, ε-caprolactam, ω-laurolactam and ε-enantolactam.

In particular, for use as a pipe, a material having a wide processing temperature range, being thermally stable and ensuring excellent extrusion processability is preferred, and a homopolymer having a relatively low melting point such as polyamide 6, polyamide 11, polyamide 12, polyamide 610 and polyamide 612, or a copolymer such as polyamide 6/66, polyamide 6/12 and polyamide 11/12 is suitably used. Among these, polyamide 11 and polyamide 12 are preferred in view of viscosity and water absorptivity.

The polyamide resin may also be a mixture with another polyamide resin or other polymer. In the mixture, the content of the polyamide resin is preferably 50 wt% or more.

Examples of the polyamide resin mixed include polyamide 6, polyamide 66, polyamide 11, polyamide 12, polyamide 610, polyamide 612, polyamide 912, polyamide 1010, polyamide 1212, polyamide 6/66 copolymer, polyamide 6/12 copolymer and polyamide 11/12 copolymer. Examples of the other polymer include polypropylene, ABS resin, polyphenylene oxide, polycarbonate, polyethylene terephthalate and polybutylene terephthalate.

In the above-described resin, functionality-imparting agents such as a heat-resisting agent, a weatherproofing agent, a releasing agent, a lubricant, an antistatic agent, a flame retardant and a flame retardant aid may be added.

In the present invention, the colorant having absorbency for laser light may be any material as long as it has such a property, but specific examples thereof include inorganic colorants such as carbon black and composite oxide-based pigment, and organic colorants such as phthalocyanine-based pigment and polymethine-based pigment.

### (Resin Having Transmittance for Laser Light)

The resin having transparency to laser light is not particularly limited as long as it has thermoplasticity, can be shaped into a fitting or the like for pipes, and exhibits transparency to laser light. Examples thereof include resins such as polyvinyl alcohol, polyvinyl acetate, polyamide, polyolefin (e.g., polyethylene polypropylene, a copolymer of ethylene, propylene or the like), polystyrene, polyvinyl chloride, polyvinylidene chloride, polymethyl methacrylate, a copolymer of styrene, vinyl chloride, methyl methacrylate, vinylidene chloride or the like, and condensed-system engineering plastic (e.g., polycarbonate, polyamide, polyester, polyether, polyether ketone, polyether ether ketone, polysulfone, polyimide). If desired, a resin in which a reinforcing fiber such as glass fiber or glass fiber is added may also be used.

More specifically, by taking account of adhesion to the resin having absorbency for laser light, a resin of the same species is preferably used.

The term "having transparency to laser light" as used herein means a transparency such that even if laser light is partially absorbed, the remaining laser light is transmitted and the resin in that portion is not melted.

In the above described resin, functionality-imparting agents such as a heat-resisting agent, a weatherproofing agent, a releasing agent, a lubricant, an antistatic agent, a flame retardant and a flame retardant aid may be added.

Also, a colorant exhibiting transparency to laser light may be added to the resin. Examples of the colorant include organic dyes such as anthraquinone-based dye, perylene-based dye, perynone-based dye, heterocyclic dyes, disazo-based dye and monoazo-based dye. Some of these dyes may be mixed and used.

### (Resin Member Having Weak Absorbency for Laser Light)

In the present invention, a resin member having weak absorbency for laser light may also be used as the resin member having transparency to laser light.

The term "having weak absorbency for laser light" as used herein means that a resin which is transparent to laser light but absorbs a part of laser light to cause heat generation from the resin in that portion.

Therefore, when irradiated with laser light, this resin member absorbs the energy and generates heat and the temperature in the joining face portion with a pipe-shaped article elevates to a certain extent. In this state, when the pipe-shaped article, fitting or flange comprising a resin member having absorbency for laser light is heated by absorbing laser light and melted, the resin member having weak absorbency for laser light is also readily melted, as a result, the resin members are satisfactorily interlaced with each other in the junction part and a strong joining force is obtained.

As for the resin member having weak absorbency for laser light, a resin in which an additive having weak absorbency for laser light is blended, or a resin in which an additive having absorbancy for laser light is blended within the range of not allowing for melting of the resin even when laser light is absorbed, can be used.

The additive having weak absorbency for laser light may be sufficient if it is a material which absorbs a part of laser light and transmits a part of the laser light in resonance with the wavelength of the laser light. In particular, an additive having a transmittance of 40 to 90% for laser light is preferred. The transmittance for laser light is a numerical value obtained by measuring an article prepared by shaping a weakly absorptive additive into a 3.2 mm-thick ASTM No. 1 dumbbell.

The content of the weakly absorptive additive is preferably from 0.1 to 50 wt% based on the resin. If the content is less than 0.1 wt%, less heat is generated by absorbing the energy of laser light to fail in satisfactorily elevating the temperature of the resin member and the joining strength of the junction part decreases, whereas if the content exceeds 50 wt%, this is disadvantageous in that the physical properties such as bending modulus decreases or a large amount of laser light energy is necessary for obtaining a sufficiently high welding strength.

Examples of the weakly absorptive additive include a copolymer of ethylene and/or propylene with other olefin or vinyl-based compound (hereinafter referred to as an "ethylene and/or propylene-based copolymer"), a block copolymer obtained by hydrogenating a copolymer of styrene and conjugated diene compound (hereinafter referred to as a "styrene-based copolymer"), and a modified ethylene and/or propylene-based copolymer obtained by adding an α,β-unsaturated carboxylic acid or a derivative thereof to such an ethylene and/or propylene-based copolymer or styrene-based copolymer.

Examples of the ethylene and/or propylene-based copolymer include an (ethylene and/or propylene)·α-olefin-based copolymer, an (ethylene and/or propylene)·α,β-unsaturated carboxylic acid copolymer, an (ethylene and/or propylene)·α,β-unsaturated carboxylic acid ester-based copolymer, and an ionomer polymer.

The (ethylene and/or propylene)·α-olefin-based copolymer is a polymer obtained by copolymerizing an ethylene and/or a propylene with an α-olefin having 3 or more carbon atoms, and examples of the α-olefin having 3 or more carbon atoms include propylene, butene-1, hexene-1, decene-1, 4-methylbutene-1 and 4-methylpentene-1.

The (ethylene and/or propylene)·α,β-unsaturated carboxylic acid-based copolymer is a polymer obtained by copolymerizing ethylene and/or propylene with an α,β-unsaturated carboxylic acid monomer, and examples of the α,β-unsaturated carboxylic acid monomer include acrylic acid, methacrylic acid, ethacrylic acid and maleic anhydride.

The (ethylene and/or propylene)·α,β-unsaturated carboxylic acid ester-based copolymer is a polymer obtained by copolymerizing ethylene and/or propylene with an α,β-unsaturated carboxylic acid ester monomer, and examples of the α,β-unsaturated carboxylic acid ester monomer include acrylic acid esters such as methyl acrylate, ethyl acrylate, propyl acrylate and butyl acrylate, and methacrylic acid esters such as methyl methacrylate, ethyl methacrylate, propyl methacrylate and butyl methacrylate.

The ionomer polymer is a copolymer of olefin and α,β-unsaturated carboxylic acid, where at least a part of the carboxyl group is ionized by the neutralization of metal ions. The olefin is preferably ethylene and the α,β-unsaturated carboxylic acid is preferably an acrylic acid, a methacrylic acid or the like. Examples of the metal ions include ions such as sodium, potassium magnesium, calcium and zinc.

The styrene-based copolymer is a block copolymer obtained by hydrogenating a block copolymer consisting of at least one, preferably two or more, polymer block A mainly comprising styrene, and at least one polymer block B mainly comprising a conjugated diene compound, and this copolymer has a structure, for example, A-B-A, B-A-B-A, A-B-A-B-A or B-A-B-A-B.

Examples of the conjugated diene compound include butadiene, isoprene, 1,3-pentadiene and 2,3-dimethyl-1,3-butadiene.

Examples of the styrene-based copolymer include a hydrogenated styrene-butadiene-styrene copolymer (SEBS) and a hydrogenated styrene-isoprene-styrene copolymer (SEPS).

The modified (ethylene and/or propylene)-based copolymer and modified styrene-based copolymer can be obtained by adding an α,β-unsaturated carboxylic acid group or its derivative group, which is in the solution state or melted state, to the (ethylene and/or propylene)-based copolymer of styrene-based copolymer specified above. Examples of the method for producing these modified (ethylene and/or propylene)-based copolymer and modified styrene-based copolymer include a method of reacting a compound containing a carboxylic acid group or its derivative group with an (ethylene and/or propylene)-based copolymer or styrene-based copolymer in the presence of a radical initiator in an extruder.

Examples of the α,β-unsaturated carboxylic acid or a derivative thereof (hereinafter simply referred to as an "unsaturated carboxylic acid) include an acrylic acid, a methacrylic acid, an ethacrylic acid, a malic acid, a fumaric acid and an anhydride or ester of these acids.

In the case where an additive having absorbency for laser light is blended in the resin, the amount added thereof is adjusted to a range that when laser light is irradiated, even if a part of the laser light is absorbed, the remaining laser light is transmitted and the resin in that portion is not melted.

As for the additive having absorbency for laser light, an inorganic colorant such as carbon black and composite oxide-based pigment, or an organic colorant such as phthalocyanine-based pigment and polymethine-based pigment, is used.

In the present invention, the coupler comprising a resin member having weak absorbency for laser light may be constituted by an inner layer comprising a resin member in which an additive or the like having weak absorbency for laser light is blended in the resin, and an outer layer comprising a resin member not containing an additive or the like having weak absorbency for laser light. The thickness of the inner layer is preferably 1/2 or less of the entire fitting thickness. By constituting the multilayer construction, the laser energy loss due to the weakly absorptive material can be decreased and the required laser light output can be made small, so that a compact small semiconductor laser can be selected and an operation at a higher scanning rate can be realized. Thus, this construction is advantageous in view of apparatus and speed.

### (Laser light absorber)

The laser light absorber includes an absorber obtained by directly coating a colorant having absorbency for laser light. More specifically, a suspension prepared by dispersing a colorant in a solvent is coated on the joining face such as an outer surface of a pipe-shaped article, an inner surface of a fitting, and an end face of a pipe-shaped article or flange, and dried, whereby the colorant is disposed on the joining face such as outer surface of pipe-shaped article, the inner surface of fitting, or the end face of pipe-shaped article or flange.

As for the colorant having absorbency for laser light, an inorganic colorant such as carbon black and composite oxide-based pigment, or an organic colorant such as phthalocyanine-based pigment and polymethine-based pigment, is used.

Also, a film comprising a resin member containing a colorant having absorbency for laser light may also be used as the laser light absorber.

This resin is not particularly limited as long as it can be shaped into a film and exhibits sufficiently high absorbency for laser light. Examples thereof include those obtained by mixing a colorant having absorbency for laser light into a resin such as polyvinyl alcohol, polyvinyl acetate, polyamide, polyolefin (e.g., polyethylene, polypropylene, a copolymer of ethylene, propylene or the like), polystyrene, polyvinyl chloride, polyvinylidene chloride, polymethyl methacrylate, a copolymer of styrene, vinyl chloride, methyl methacrylate, vinylidene chloride or the like, and condensed-system engineering plastic (e.g., polycarbonate, polyamide, polyester, polyether, polyether ketone, polyether ether ketone, polysulfone, polyimide).

More specifically, by taking account of adhesion to the pipe-shaped article, fitting and/or flange, a resin of the same species as the resin used for the pipe-shaped article, fitting and/or flange is preferably used.

The thickness of the film is preferably from 10 to 1,000 µm, more preferably from 10 to 500 µm. If the thickness is less than 10 µm, breakage is readily generated at the joining of the pipe and the fitting, whereas if it exceeds 1,000 µm, the film becomes rigid and the handleability is worsened.

### (Joining by Irradiation with Laser Light)

Examples of the laser light used for the laser welding method of the present include laser rays of a glass:neodymium³⁺ laser, a YAG:neodymium³⁺ laser, a ruby laser, a helium-neon laser, a krypton laser, an argon laser, an H₂ laser, an N₂ laser and a semiconductor laser. Among these lasers, a semiconductor laser is preferred.

The wavelength of the laser light varies depending on the resin material joined and cannot be indiscriminately determined but is preferably 400 nm or more. If the wavelength is shorter than 400 nm, serious deterioration of the resin may occur.

The output of the laser light can be adjusted by the scanning rate and the absorption capacity of the transmitting substrate. If the output of the laser light is low, joining faces of resin materials are hardly melted, whereas, if the output is high, this causes a problem that the resin material is evaporated or decomposed to decrease the strength.

### (Use)

The joining method of the present invention can be applied to a fuel pipe for automobiles, an air brake pipe for automobiles, a medical liquid-transporting pipe, a fuel gas-supplying or transporting pipe, or the like.

### EXAMPLES

The present invention is described below by referring to Examples.

### (Examples of Fitting)

### Example 1:

As shown in Figs. 1A and 1B, a laser-transmitting cylindrical fitting 5 (inner diameter: 31.5 mm, thickness: 3.5 mm) was produced by using polyamide 12 (UBESTA3035U, produced by Ube Industries, Ltd.).

Also, laser-absorbing pipes 1 and 2 (outer diameter: 32 mm, thickness: 1.5 mm) were produced by using the same polyamide 12 in which 0.5 wt% of carbon black was blended.

The pipes were inserted into the fitting and set in a semiconductor laser device. While irradiating laser light from the fitting side, the irradiation nozzle was moved along the circumference of the fitting. In consequence, melting and solidification were generated at the abutting face part between fitting and pipes, whereby the fitting and the pipes were strongly welded.

At this laser welding, laser light at a wavelength of 808 nm and an output of 30 W was used at a scanning rate of 10 mm/s.

The other end part of the pipe was laser-welded with another fitting in the same manner as above and the adhesive strength of these laser-welded pipe and fitting was evaluated by drawing out the fitting sides at both ends in the longitudinal direction, as a result, the junction part was separated at 4200 N.

### Example 2:

As shown in Figs. 2A and 2B, a laser-transmitting cylindrical fitting 5 (inner diameter: 31.5 mm, thickness: 3.5 mm) was produced by using polyamide 12 (UBESTA3035U, produced by Ube Industries, Ltd.).

Also, laser-transmitting pipes 3 and 4 (outer diameter: 32 mm, thickness: 1.5 mm) were produced by using the same polyamide 12.

On the outer surfaces of the pipe 3 and 4, a carbon black-based black ink was coated and dried to dispose a laser light absorber 8.

The pipes were inserted into the fitting and set in a semiconductor laser device. While irradiating laser light from the fitting side, the irradiation nozzle was moved along the circumference of the fitting. In consequence, melting and solidification were generated at the abutting face part between fitting and pipes, whereby the fitting and the pipes were strongly welded.

At this laser welding, laser light at a wavelength of 808 nm and an output of 30 W was used at a scanning rate of 10 mm/s.

The adhesive strength of these laser-welded pipe and fitting was evaluated in the same manner as in Example 1, as a result, the adhesive strength was 3,600 N.

### Example 3:

As shown in Figs. 3A and 3B, a laser-transmitting cylindrical fitting 5' (inner diameter: 31.5 mm, thickness: 3.5 mm) was produced by using polyamide 12 (UBESTA3035U, produced by Ube Industries, Ltd.).

Also, laser-transmitting pipes 3' and 4' (outer diameter: 32 mm, thickness: 1.5 mm) were produced by using the same polyamide 12.

Furthermore, a film was melt-extruded by using the same polyamide 12 in which 0.5 wt% of carbon black was blended, and then biaxially stretched to produce a heat-shrinkable film.

This heat-shrinkable film was covered on the outer surface of the pipes 7 and heat-treated to tightly adhere to the pipes, thereby disposing a laser light absorber 8.

The pipes were inserted into the fitting and set in a semiconductor laser device. While irradiating laser light from the fitting side, the irradiation nozzle was moved along the circumference of the fitting. In consequence, melting and solidification were generated at the abutting face part between fitting and pipes, whereby the fitting and the pipes were strongly welded.

At this laser welding, laser light at a wavelength of 808 nm and an output of 30 W was used at a scanning rate of 10 mm/s.

The adhesive strength of these laser-welded pipe and fitting was evaluated in the same manner as in Example 1, as a result, the adhesive strength was 4,000 N.

### Example 4:

As shown in Figs. 1A and 1E, a laser-transmitting cylindrical fitting 5 (inner diameter: 31.5 mm, thickness: 3.5 mm) was produced by using polyamide 12 (UBESTA3035U, produced by Ube Industries, Ltd.).

Also, a laser-absorbing pipe 2 (outer diameter: 32 mm, thickness: 1.5 mm) was produced by using the same polyamide 12 in which a yellow coloring agent and 0.05 wt% of an infrared absorbent (PRO-JET830NP, produced by Avecia) were blended. The color of the pipe was blackened yellow.

The pipes were inserted into the fitting and set in a semiconductor laser device. While irradiating laser light from the fitting side, the irradiation nozzle was moved along the circumference of the fitting. In consequence, melting and solidification were generated at the abutting face part between fitting and pipes, whereby the fitting and the pipes were strongly welded.

At this laser welding, laser light at a wavelength of 808 nm and an output of 30 W was used at a scanning rate of 10 mm/s.

The adhesive strength of these laser-welded pipe and fitting was evaluated in the same manner as in Example 1, as a result, the adhesive strength was 3,900 N.

### Example 5:

As shown in Figs. 4A and 4B, a laser-transmitting cylindrical fitting 5 (inner diameter: 31.5 mm, thickness: 3.5 mm) was produced by using polyamide 12 (UBESTA3035U, produced by Ube Industries, Ltd.).

Also, laser-absorbing multilayer pipes (outer diameter: 32 mm, thickness: 1.5 mm) were produced by co-extruding, as the outer layer 1a or 2a, the same polyamide 12 in which a yellow coloring agent and 0.05 wt% of an infrared absorbent (PRO-JET830NP, produced by Avecia) were blended, and, as the inner layer 1b or 2b, the same polyamide 12 in which the infrared absorbent was omitted and only the yellow material was blended. The thickness of the absorber-containing outer layer was 100 µm and the outer appearance of the two-layer pipe was canary yellow.

The pipes were inserted into the fitting and set in a semiconductor laser device. While irradiating laser light from the fitting side, the irradiation nozzle was moved along the circumference of the fitting. In consequence, melting and solidification were generated at the abutting face part between fitting and pipes, whereby the fitting and the pipe were strongly welded.

At this laser welding, laser light at a wavelength of 808 nm and an output of 30 W was used at a scanning rate of 10 mm/s.

The adhesive strength of these laser-welded pipe and fitting was evaluated in the same manner as in Example 1, as a result, the adhesive strength was 4,400 N, revealing a higher strength than that in the case of a single-layer pipe. Also, the deformation of the welded part observed on the inner surface was smaller than that in the case of a single-layer pipe.

### Example 6:

As shown in Figs. 1A and 1B, a laser-transmitting cylindrical fitting 5 (inner diameter: 31.5 mm, thickness: 3.5 mm) was produced by using polyamide 12 (UBESTA3035U, produced by Ube Industries, Ltd.) in which 2 wt% of maleic acid-modified EPR (T7712SP, produced by JSR) was blended.

Also, laser-absorbing pipes 1 and 2 (outer diameter: 32 mm, thickness: 1.5 mm) were produced by using the same polyamide 12 in which 0.5 wt% of carbon black was blended.

The pipes were inserted into the fitting and set in a semiconductor laser device. While irradiating laser light from the fitting side, the irradiation nozzle was moved along the circumference of the fitting. In consequence, melting and solidification were generated at the abutting face part between fitting and pipes, whereby the fitting and the pipes were strongly welded.

At this laser welding, laser light at a wavelength of 808 nm and an output of 100 W was used at a scanning rate of 10 mm/s.

The adhesive strength of these laser-welded pipe and fitting was evaluated in the same manner as in Example 1, as a result, the pipe was broken at 5,600 N.

### Example 7:

As shown in Figs. 1A and 1B, a laser-transmitting cylindrical fitting 5 (inner diameter: 31.5 mm, thickness: 3.5 mm) was produced by using polyamide 12 (UBESTA3035U, produced by Ube Industries, Ltd.) in which 0.005 wt% of an infrared absorbent (PRO-JET830NP, produced by Avecia) was blended.

Also, laser-absorbing pipes 1 and 2 (outer diameter: 32 mm, thickness: 1.5 mm) were produced by using the same polyamide 12 in which 0.5 wt% of carbon black was blended.

The pipes were inserted into the fitting and set in a semiconductor laser device. While irradiating laser light from the fitting side, the irradiation nozzle was moved along the circumference of the fitting. In consequence, melting and solidification were generated at the abutting face part between fitting and pipes, whereby the fitting and the pipes were strongly welded.

At this laser welding, laser light at a wavelength of 808 nm and an output of 100 W was used at a scanning rate of 10 mm/s.

The adhesive strength of these laser-welded pipe and fitting was evaluated in the same manner as in Example 1, as a result, the pipe was broken at 5,700 N.

### (Examples of Flange)

### Example 8:

Laser-transmitting pipes 3 and 4 (outer diameter: 32 mm, thickness: 1.5 mm) were produced by using polyamide 12 (UBESTA3035U, produced by Ube Industries, Ltd.).

Also, a laser-absorbing ring-like flange 6 (outer diameter: 32 mm, inner diameter: 29 mm, thickness: 3 mm) was produced by using the same polyamide 12 in which 0.5 wt% of carbon black was blended.

The pipes were butted together through the flange under pressure and, in this state, set in a semiconductor laser device. While irradiating laser light from one pipe side, the irradiation nozzle was moved along the circumference of the pipe. In consequence, melting and solidification were generated at the abutting face part between flange and pipe, whereby the flange and the pipe were strongly welded. Also, laser light was irradiated from another pipe side in the same manner. Consequently, melting and solidification were generated at the abutting face part between flange and pipe, and the flange and the pipe were strongly welded.

The adhesive strength of these laser-welded pipes and flange was evaluated by fixing the pipes at both ends with a jig and drawing out the pipes in the longitudinal direction, as a result, the adhesive strength was 4,200 N.

### Example 9:

Laser-absorbing pipes (outer diameter: 32 mm, thickness: 1.5 mm) were produced by using polyamide 12 (UBESTA3035U, produced by Ube Industries, Ltd.) in which 0.5 wt% of carbon black was blended.

Also, a laser-transmitting ring-like flange (outer diameter: 32 mm, inner diameter: 29 mm, thickness: 3 mm) was produced by using the same polyamide 12.

The pipes were butted together through the flange under pressure and in this state, set in a semiconductor laser device. While irradiating laser light from the flange side toward one pipe, the irradiation nozzle was moved along the circumference of the flange. In consequence, melting and solidification were generated at the abutting face part between flange and pipe, whereby the flange and the pipe were strongly welded. Also, laser light was irradiated from the flange side toward the other pipe in the same manner. Consequently, melting and solidification were generated at the abutting face part between flange and pipe, and the flange and the pipe were strongly welded.

The adhesive strength of these laser-welded pipes and flange was evaluated in the same manner as in Example 8, as a result, the adhesive strength was 4,000 N.

### Example 10:

Laser-transmitting pipes (outer diameter: 32 mm, thickness: 1.5 mm) were produced by using polyamide 12 (UBESTA3035U, produced by Ube Industries, Ltd.).

Also, a laser-transmitting ring-like flange (outer diameter: 32 mm, inner diameter: 29 mm, thickness: 3 mm) was produced by using the same polyamide 12.

On both end faces of the flange, a carbon black-based black ink was coated and dried to dispose a laser light absorber.

The pipes were butted together through the flange under pressure and, in this state, set in a semiconductor laser device. While irradiating laser light from the flange side toward one pipe, the irradiation nozzle was moved along the circumference of the flange. In consequence, melting and solidification were generated at the abutting face part between flange and pipe, whereby the flange and the pipe were strongly welded. Also, laser light was irradiated from the flange side toward the other pipe in the same manner. Consequently, melting and solidification were generated at the abutting face part between flange and pipe, and the flange and the pipe were strongly welded.

At this laser welding, laser light at a wavelength of 808 nm and an output of 30 W was used at a scanning rate of 10 mm/s.

The adhesive strength of these laser-welded pipes and flange was evaluated in the same manner as in Example 1, as a result, the adhesive strength was 3,700 N.

### Example 11:

Laser-transmitting pipes (outer diameter: 32 mm, thickness: 1.5 mm) were produced by using polyamide 12 (UBESTA3035U, produced by Ube Industries, Ltd.).

Also, a laser-transmitting ring-like flange (outer diameter: 32 mm, inner diameter: 29 mm, thickness: 3 mm) was produced by using the same polyamide 12.

Furthermore, a film was melt-extruded by using the same polyamide 12 in which 0.5 wt% of carbon black was blended.

This film was disposed on both end faces of the flange and the pipes were pressed to the both ends to fix the laser light absorber.

The pipes butted together through the flange under pressure were in this state set in a semiconductor laser device. While irradiating laser light from the flange side toward one pipe, the irradiation nozzle was moved along the circumference of the flange. In consequence, melting and solidification were generated at the abutting face part between flange and pipe, whereby the flange and the pipe were strongly welded. Also, laser light was irradiated from the flange side toward the other pipe in the same manner. Consequently, melting and solidification were generated at the abutting face part between flange and pipe, and the flange and the pipe were strongly welded.

At this laser welding, laser light at a wavelength of 808 nm and an output of 30 W was used at a scanning rate of 10 mm/s.

The adhesive strength of these laser-welded pipes and flange was evaluated in the same manner as in Example 8, as a result, the adhesive strength was 4,100 N.

### Example 12:

Laser-transmitting pipes (outer diameter: 32 mm, thickness: 1.5 mm) were produced by using polyamide 12 (UBESTA3035U, produced by Ube Industries, Ltd.).

Also, a laser-transmitting ring-like flange (outer diameter: 32 mm, inner diameter: 29 mm, thickness: 3 mm) was produced by using the same polyamide 12 in which 2 wt% of maleic acid-modified EPR (T7712SP, produced by JSR) was blended.

Furthermore, a film was melt-extruded by using the same polyamide 12 in which 0.5 wt% of carbon black was blended.

This film was disposed on both end faces of the flange and the pipes were pressed to the both ends to fix the laser light absorber.

The pipes butted together through the flange under pressure were in this state set in a semiconductor laser device. While irradiating laser light from the flange side toward one pipe, the irradiation nozzle was moved along the circumference of the flange. In consequence, melting and solidification were generated at the abutting face part between flange and pipe, whereby the flange and the pipe were strongly welded. Also, laser light was irradiated from the flange side toward the other pipe in the same manner. Consequently, melting and solidification were generated at the abutting face part between flange and pipe, and the flange and the pipe were strongly welded.

At this laser welding, laser light at a wavelength of 808 nm and an output of 60 W was used at a scanning rate of 10 mm/s.

The adhesive strength of these laser-welded pipes and flange was evaluated in the same manner as in Example 8, as a result, the pipe was broken at 5,600 N.

### Example 13:

Laser-transmitting pipes (outer diameter: 32 mm, thickness: 1.5 mm) were produced by using polyamide 12 (USESTA3035U, produced by Ube Industries, Ltd.).

Also, a laser-transmitting ring-like flange (outer diameter: 32 mm, inner diameter: 29 mm, thickness: 3 mm) was produced by using the same polyamide 12 in which 0.005 wt% of an infrared absorbent (PRO-JET830NP, produced by Avecia) was blended.

Furthermore, a film was melt-extruded by using the same polyamide 12 in which 0.5 wt% of carbon black was blended.

This film was disposed on both end faces of the flange and the pipe was pressed to the both ends to fix the laser light absorber.

The pipes butted together through the flange under pressure were, in this state, set in a semiconductor laser device. While irradiating laser light from the flange side toward one pipe, the irradiation nozzle was moved along the circumference of the flange. In consequence, melting and solidification were generated at the abutting face part between flange and pipe, whereby the flange and the pipe were strongly welded. Also, laser light was irradiated from the flange side toward the other pipe in the same manner. Consequently, melting and solidification were generated at the abutting face part between flange and pipe, and the flange and the pipe were strongly welded.

At this laser welding, laser light at a wavelength of 808 nm and an output of 60 W was used at a scanning rate of 10 mm/s.

The adhesive strength of these laser-welded pipes and flange was evaluated in the same manner as in Example 8, as a result, the pipe was broken at 5,600 N.

### (Examples of Direct Joining)

### Example 14:

As shown in Fig. 9, a first pipe 11 (outer diameter: 32 mm, thickness: 1.5 mm) with the inner surface of the end part having a tapered joining face was produced by using polyamide 12 (UBESTA3035U, produced by Ube Industries, Ltd.).

Also, a second pipe 12 (outer diameter: 32 mm, thickness: 1.5 mm) with the outer surface of the end part having a tapered joining face matching the tapered joining face of the end part of the first pipe was produced by using the same polyamide 12 in which 0.5 wt% of carbon black was blended.

The tapered joining faces of respective end parts of these first and second pipes were abutted together and set in a semiconductor laser device 9. While irradiating laser light from the first pipe 11 side, the irradiation nozzle was moved along the circumference of the first pipe. In consequence, melting and solidification were generated on the tapered joining faces of respective end parts of the first and second pipes, whereby the first pipe and the second pipe were strongly welded.

The adhesive strength of these laser-welded pipes was evaluated by drawing out the end parts of the pipes in the longitudinal direction, as a result, the junction part was unjoined at 3,600 N.

### Example 15:

As shown in Fig. 10, a first pipe 11 (outer diameter: 32 mm, thickness: 1.5 mm) with the inner surface of the end part having a tapered joining face was produced by using polyamide 12 (UBESTA3035U, produced by Ube Industries, Ltd.).

Also, a second pipe 13 (outer diameter: 32 mm, thickness: 1.5 mm) with the outer surface of the end part having a tapered joining face matching the tapered joining face of the end part of the first pipe was produced by using the same polyamide 12.

On the tapered joining face of the second pipe 13, a carbon black-based black ink was coated and dried to dispose a laser light absorber 14.

The tapered joining faces of respective end parts of these first and second pipes were abutted together and set in a semiconductor laser device. While irradiating laser light from the first pipe side, the irradiation nozzle was moved along the circumference of the first pipe. In consequence, melting and solidification were generated on the tapered joining faces of respective end parts of the first and second pipes, whereby the first pipe and the second pipe were strongly welded.

At this laser welding, laser light at a wavelength of 808 nm and an output of 30 W was used at a scanning rate of 10 mm/s.

The adhesive strength of these laser-welded pipes was evaluated in the same manner as in Example 14, as a result, the adhesive strength was 3,300 N.

### Example 16:

As shown in Fig. 11, a first pipe 16 (outer diameter: 32 mm, thickness: 1.5 mm) with the inner surface of the end part having a tapered joining face was produced by using polyamide 12 (UBESTA3035U, produced by Ube Industries, Ltd.).

Also, a second pipe 17 (outer diameter: 32 mm, thickness: 1.5 mm) with the outer surface of the end part having a tapered joining face matching the tapered joining face of the end part of the first pipe was produced by using the same polyamide 12.

Furthermore, a film was melt-extruded by using the same polyamide 12 in which 0.5 wt% of carbon black was blended, and then biaxially stretched to produce a heat-shrinkable film 18.

This heat-shrinkable film 18 was covered on the tapered joining face of the second pipe 17 and heat-treated to tightly adhere to the pipe, thereby disposing a laser light absorber 18.

The tapered joining faces of respective end parts of these first and second pipes were abutted together and set in a semiconductor laser device. While irradiating laser light from the first pipe side, the irradiation nozzle was moved along the circumference of the first pipe. In consequence, melting and solidification were generated on the tapered joining faces of respective end parts of the first and second pipes, whereby the first pipe and the second pipe were strongly welded.

At this laser welding, laser light at a wavelength of 808 nm and an output of 30 W was used at a scanning rate of 10 mm/s.

The adhesive strength of these laser-welded pipes was evaluated in the same manner as in Example 14, as a result, the adhesive strength was 3,700 N.

### Example 17:

As shown in Fig. 9, a first pipe 11 (outer diameter: 32 mm, thickness: 1.5 mm) with the inner surface of the end part having a tapered joining face was produced by using polyamide 12 (UBESTA3035U, produced by Ube Industries, Ltd.) in which 2 wt% of maleic acid-modified EPR (T7712SP, produced by JSR) was blended.

Also, a second pipe 12 (outer diameter: 32 mm, thickness: 1.5 mm) with the outer surface of the end part having a tapered joining face matching the tapered joining face of the end part of the first pipe was produced by using the same polyamide 12 in which 0.5 wt% of carbon black was blended.

The tapered joining faces of respective end parts of these first and second pipes 11 and 12 were abutted together and set in a semiconductor laser device 9. While irradiating laser light from the first pipe side, the irradiation nozzle was moved along the circumference of the first pipe. In consequence, melting and solidification were generated on the tapered joining faces of respective end parts of the first and second pipes, whereby the first pipe and the second pipe were strongly welded.

At this laser welding, laser light at a wavelength of 808 nm and an output of 60 W was used at a scanning rate of 10 mm/s.

The adhesive strength of these laser-welded pipes was evaluated in the same manner as in Example 14, as a result, the adhesive strength was 4,900 N.

### Example 18:

As shown in Fig. 9, a first pipe 11 (outer diameter: 32 mm, thickness: 1.5 mm) with the inner surface of the end part having a tapered joining face was produced by using polyamide 12 (UBESTA3035U, produced by Ube Industries, Ltd.) in which 0.005 wt% of an infrared absorbent (PRO-JET830NP, produced by Avecia) was blended.

Also, a second pipe 12 (outer diameter: 32 mm, thickness: 1.5 mm) with the outer surface of the end part having a tapered joining face matching the tapered joining face of the end part of the first pipe was produced by using the same polyamide 12 in which 0.5 wt% of carbon black was blended.

The tapered joining faces of respective end parts of these first and second pipes 11 and 12 were abutted together and set in a semiconductor laser device 9.
While irradiating laser light from the first pipe 11 side, the irradiation nozzle was moved along the circumference of the first pipe 11. In consequence, melting and solidification were generated on the tapered joining faces of respective end parts of the first and second pipes, whereby the first pipe and the second pipe were strongly welded.

At this laser welding, laser light at a wavelength of 808 nm and an output of 60 W was used at a scanning rate of 10 mm/s.

The adhesive strength of these laser-welded pipes was evaluated in the same manner as in Example 14, as a result, the adhesive strength was 4,600 N.

### INDUSTRIAL APPLICABILITY

According to the present invention, pipe-shaped articles comprising a resin member can be laser-welded and strongly joined together directly or through a fitting or flange by irradiating laser light.

In the laser welding method of the present invention, the problems of dripping and cost and the concern about the environment and safety due to a strong solvent, which are encountered in conventional heat welding methods, can be overcome and also, the joining can be achieved with a high joining strength as compared with that obtained by using a solvent adhesive, so that this method can be suitably used for gas pipes and the like.

Furthermore, the airtightness can be elevated as compared with mechanical joining methods and therefore, this method can be suitably applied also to a fuel pipe for automobiles, an air brake pipe for automobiles, and a medical liquid-transporting pipe.

## Claims

1. A method for joining pipe-shaped articles, comprising:
butting pipe-shaped articles comprising a resin member by abutting respective end parts thereof together directly or through a flange comprising a resin member or by inserting the end parts into a fitting comprising a resin member, or in this abutment or insertion, while disposing a laser light absorber between the end parts of the pipe-shaped articles or between the end part(s) of the pipe-shaped article(s) and the flange or fitting,
at least one end part of the pipe-shaped articles or the flange or fitting comprising a resin member with a transparency to laser light,
at least one end part of the pipe-shaped articles or the flange, fitting or laser light absorber comprising a resin member with an absorbency for laser light, and
irradiating laser light on a portion contacted by the end part of the pipe-shaped articles, the flange, the fitting and/or the laser light absorber, thereby laser-welding them.

2. The method for joining pipe-shaped articles as claimed in claim 1, which is a method of joining pipe-shaped articles through a fitting, wherein the pipe-shaped articles are joined by either one of the following methods:
(A) a pipe-shaped article comprising a resin member having absorbency for laser is inserted into a fitting comprising a resin member having transparency to laser light, and laser light is irradiated from said fitting side, thereby laser-welding the pipe-shaped article and the fitting; or
(B) a laser light absorber is disposed on the outer surface of a pipe-shaped article comprising a resin member having transparency to laser light, said pipe-shaped article is inserted into a fitting comprising a resin member having transparency to laser light, and laser light is irradiated from said fitting side, thereby laser-welding the pipe-shaped article and the fitting.

3. The method for joining pipe-shaped articles as claimed in claim 1, which is a method of joining pipe-shaped articles through a flange, wherein the pipe-shaped articles are joined by any one of the following methods:
(C) the end parts of pipe-shaped articles comprising a resin member having transparency to laser light are butted together through a flange comprising a resin member having absorbance for laser light while applying a pressure, and laser light is irradiated from the end part sides of the pipe-shaped articles, thereby laser-welding the end parts;
(D) the end parts of pipe-shaped articles comprising a resin member having absorbency for laser light are butted together through a flange comprising a resin member having transparency to laser light while applying a pressure, and laser light is irradiated from the flange side, thereby laser-welding the end parts;
(E) the end parts of pipe-shaped articles comprising a resin member having transparency to laser light are butted together through a flange comprising a resin member having transparency to laser light while applying a pressure in the state that a laser light absorber is disposed at the abutting parts between said flange and said pipe-shaped articles, and laser light is irradiated from the end part sides of the pipe-shaped articles, thereby laser-welding the end parts; or
(F) the end parts of pipe-shaped articles comprising a resin member having transparency to laser light are butted together through a flange comprising a resin member having transparency to laser light while applying pressure in the state that a laser light absorber is disposed at the abutting parts between said flange and said pipe-shaped articles, and laser light is irradiated from the flange side, thereby laser-welding the end parts.

4. The method for joining pipe-shaped articles as claimed in claim 1, which is a method of joining end parts of pipe-shaped articles with each other, wherein the pipe-shaped articles are joined by any one of the following methods:
(G) the end part of a first pipe-shaped article comprising a resin member having transparency to laser light, with the inner surface of the end part having a tapered joining face, and the end part of a second pipe-shaped article comprising a resin member having absorbency for laser light, with the outer surface of the end part having a tapered joining face matching the tapered joining face of the end part of said first pipe-shaped article, are abutted together, and laser light is irradiated from said first pipe-shaped article side, thereby laser-welding the joining faces to each other; or
(H) the end part of a first pipe-shaped article comprising a resin member having transparency to laser light, with the inner surface of the end part having a tapered joining face, and the end part of a second pipe-shaped article comprising a resin member having transparency to laser light, with the outer surface of the end part having a tapered joining face matching the tapered joining face of the end part of said first pipe-shaped article, in which a laser light absorber is disposed on said tapered joining face, are abutted together, and laser light is irradiated from said first pipe-shaped article side, thereby laser-welding the joining faces to each other.

5. The method for joining pipe-shaped articles as claimed in claim 2 wherein, in joining pipe-shaped articles by the method of (A), the pipe-shaped articles comprise an outer layer comprising a resin member having absorbency for laser light and an inner layer comprising a resin member having transparency to laser light.

6. The method for joining pipe-shaped articles as claimed in claim 5, wherein the thickness of the outer layer is from 10 to 1,000 µm.

7. The method for joining pipe-shaped articles as claimed in any one of claims 1 to 7, wherein the laser light absorber is a colorant having absorbency for laser light.

8. The method for joining pipe-shaped articles as claimed in claim 7, wherein the laser light absorber is a film comprising a resin member containing a colorant having absorbency for laser light.

9. The method for joining pipe-shaped articles as claimed in claim 8, wherein the thickness of the film is from 10 to 1,000 µm.

10. The method for joining pipe-shaped articles as claimed in any one of claims 2 to 9, wherein the first pipe-shaped article, fitting or flange comprises a resin member having weak absorbency for laser light.

11. The method for joining pipe-shaped articles as claimed in claim 10, wherein the resin member comprises a resin and an additive having weak absorbency for laser light.

12. The method for joining pipe-shaped articles as claimed in claim 11, wherein the additive having weak absorbancy has a transmittance of 40 to 90% for laser light.

13. The method for joining pipe-shaped articles as claimed in claim 12, wherein the additive having weak absorbency is at least one member selected from ethylene and/or propylene-based copolymers, styrene-based copolymers, modified ethylene and/or propylene-based copolymers and modified styrene-based copolymers.

14. The method for joining pipe-shaped articles as claimed in claim 10 wherein, in the resin member, an additive having absorbency for laser light is incorporated in the resin within a range of not allowing melting of the resin even when laser light is absorbed.

15. The method for joining pipe-shaped articles as claimed in claims 1 to 14, wherein the resin member constituting the pipe-shaped article and fitting comprises a polyamide resin or a polyamide resin composition mainly comprising polyamide.

16. The method for joining pipe-shaped articles as claimed in claims 1 to 15, wherein the pipe-shaped article is a fuel pipe for automobiles, an air brake pipe for automobiles, a chemical liquid-transporting pipe or a fuel gas-supplying or transporting pipe.
